## Europäisches Patentamt
## European Patent Office
## Office européen des brevets

(11) Veröffentlichungsnummer: **0 198 393**
**B1**

(12) **EUROPÄISCHE PATENTSCHRIFT**

(45) Veröffentlichungstag der Patentschrift:
21.09.88

(21) Anmeldenummer: **86104784.3**

(22) Anmeldetag: **08.04.86**

(51) Int. Cl.⁴: **B 65 G 17/18**

(30) Priorität: **13.04.85 DE 3513280**

(43) Veröffentlichungstag der Anmeldung:
**22.10.86 Patentblatt 86/43**

(45) Bekanntmachung des Hinweises auf die Patenterteilung:
**21.09.88 Patentblatt 88/38**

(84) Benannte Vertragsstaaten:
**AT BE CH FR GB IT LI LU NL SE**

(56) Entgegenhaltungen:
**DE-B-1 199 184**
**DE-B-1 263 591**
**DE-B-2 407 826**
**DE-B-2 425 036**
**DE-C-2 546 748**
**DE-U-1 817 786**
**DE-U-7 815 653**
**GB-A-1 148 212**
**US-A-1 054 305**
**US-A-3 795 305**

(73) Patentinhaber: **Waldemar Glowatzki Maschinen, Apparatebau Förderanlagen, Blechverarbeitung, Dorfstrasse 27, D-3004 Isernhagen 2 (DE)**

(72) Erfinder: **Glowatzki, Waldemar, Dorfstrasse 27, D-3004 Isernhagen 2 (DE)**

(74) Vertreter: **Leine, Sigurd, Dipl.- Ing., LEINE & KÖNIG Patentanwälte Burckhardtstrasse 1, D-3000 Hannover 1 (DE)**

(54) **Becherförderer.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Becherförderer der im Oberbegriff des Anspruchs 1 genannten Art.

Durch die DE-PS-2 407 826 ist ein Becherförderer bekannt, bei dem die Mittel zur Abstützung der Becher Schwenkarme sind, die gelenkig mit den Bechern und den Zuggliedern verbunden sind. Zur Überbrückung der Spalte zwischen benachbarten Bechern sind flexible Streifen vorgesehen, die auch in der Lage sind, den Unterschied zwischen Bogen und Sekante beim Durchlaufen von Krümmungen in Umlenkbereichen aufzunehmen. Zur seitlichen Abdichtung in diesen Bereichen überlappen sich die Becher mit seitlichenWandungsteilen. Der konstruktive Aufwand dieses Becherförderers ist verhältnismäßig groß. Die Förderleistung ist gering, da die Becher immer im wesentlichen die gleiche Winkellage zur Förderrichtung haben und aus diesem Grunde die Wandungen der Becher zur Förderrichtung gleichsinnig schräg verlaufen. Der Verschleiß im Abdichtbereich ist außerdem groß.

Durch die DE-PS-2 546 748 ist ein Becherförderer bekannt, bei dem die Becher pendelnd aufgehängt sind und deren Füllöffnung somit immer nach oben weist. Die Förderleistung ist daher verhältnismäßig groß. Außerdem ergeben sich keine Abdichtprobleme zwischen schräggestellten Wandungsteilen. Der konstruktive Aufwand ist jedoch verhältnismäßig groß, und zwar insbesondere wegen der erforderlichen Mittel zum Auskippen der Becher.

Durch das DE-GM-7 815 653 ist ein Becherförderer der betreffenden Art bekannt, bei dem die jeweils eine benachbarte Kante des benachbarten Bechers übergreifende Kante den Zweck hat, einen Gutdurchfall zwischen benachbarten Bechern im Bereich der Gutaufgabe zu vermeiden. Um dies sicherzustellen, ist die übergreifende Kante hakenförmig ausgebildet, was auch dem Zweck dient, einen Abstand zu der übergriffenen Kante ohne Undichtigkeit zu ermöglichen. Der Abstand ist erforderlich, um den als Pendelbecher ausgebildeten Bechern ein sicheres Einpendeln in die stabile Lage zu ermöglichen. Da es sich wie bei dem zuvor diskutierten Becherförderer um einen Pendelbecherförderer handelt, ergeben sich die gleichen Nachteile eines hohen konstruktiven Aufwandes, insbesondere wegen der Steuermittel zum Auskippen der Becher.

Durch die GB-A-1 148 212 ist ein Plattenförderer bekannt, bei dem Platten mit ihrer vorderen Kante gelenkig mit Zuggliedern verbunden sind, während sie mit ihrer anderen Kante auf der Schwenkachse der benachbarten Platte aufliegen. Außerhalb der Platten sind von diesen unabhängig fest mit den Zuggliedern Seitenplatten verbunden, die zusammen mit den genannten Auflageplatten einen Becher bilden sollen. In Umlenkbereichen der Zugglieder sind Mittel zur Zwangssteuerung der Platten vorgesehen, um das darauf aufliegende Gut abzuwerfen. Die Zwangssteuerung ist aufwendig. Zwischen den Seitenwänden und den hierzu beweglichen Auflageplatten bestehen Zwischenräume, durch die Gut hindurchfallen kann oder durch die aufwendige Dichtungen geschlossen werden müssen. Außerdem ist die Fördermenge verhältnismäßig gering.

Die US-A-3 795 305 offenbart einen Pendelbecherförderer, bei dem die Becher mittels einer zentralen oberen Achse pendelnd mit seitlichen Zuggliedern verbunden sind. Senkrecht unter den Pendelachsen befinden sich in Axialrichtung außerhalb der Becher an diesen Steuerrollen zur Zwangsführung und Zwangssteuerung der Pendelbecher, um diese in Leerungsbereichen zu kippen und die Zerstörung notwendiger, überlappender Seitenkanten der Pendelbecher bei den Steuervorgängen, insbesondere auch in abwärts führenden Bewegungsbereichen, zu vermeiden. Dieser bekannte Pendelbecherförderer erfordert einen großen konstruktiven Aufwand und ist sowohl in der Herstellung als auch bei der Wartung wegen seiner Kompliziertheit aufwendig und teuer.

Der Erfindung liegt die Aufgabe zugrunde, einen Becherförderer der betreffenden Art zu schaffen, der die Nachteile der bekannten Becherförderer nicht aufweist, also einen geringen konstruktiven Aufwand erfordert und damit billig ist, eine große Förderleistung hat und außerdem keine Teile aufweist, die einem größeren Verschleiß unterworfen sind.

Die der Erfindung zugrundeliegende Aufgabe wird durch die im Kennzeichen des Anspruchs 1 angegebene Lehre gelöst.

Der Grundgedanke der Erfindung besteht darin, die Vorteile der beiden eingangs genannten Becherförderer weitgehend zu verbinden und deren Nachteile zu vermeiden. Der Becherförderer hat teilweise die Wirkung eines Pendelbecherförderers, so daß der Füllgrad der Becher und damit die Förderleistung verhältnismäßig groß ist. Andererseits benötigt er keine komplizierten Steuermittel wie der bekannte Pendelbecherförderer, da Vorsorge dafür getroffen ist, daß ein Herauskippen der Becher aus der Förderbahn entgegen der Auflagerichtung der Auflagekante verhindert wird, so daß die Becher wie der bekannte betreffende Becherförderer auch in Lagen kommen, in denen sie mit ihrer Füllöffnung nach unten gerichtet sind und somit das Fördergut ausschütten können. Die Mittel, die dies Herauskippen verhindern, können durch ortsfeste Auflageschienen gebildet sein, an denen sich die Becher vorzugsweise über seitliche Zapfen oder Rollen abstützen. Sie können auch durch Anschläge an den Bechern gebildet sein, die an entsprechende Gegenanschläge an den jeweils benachbarten Bechern oder an den Zuggliedern anschlagen. Diese Anschläge und/oder Gegenanschläge können dadurch gebildet sein, daß die benachbartenWandungen der Becher und ihre Abstände so bemessen sind, daß die Wandungen bei Herauskippen der Becher aus der Förderbahn gegeneinanderstoßen und so das Herauskippen verhindern. Eine weitere Möglichkeit, dieses Herauskippen zu verhindern, besteht in der Verwendung von Federn, die die Becher entgegen der Bewegung des Herauskippens vorspannen.

Eine besonders zweckmäßige Ausführungsform der Erfindung ist in Anspruch 5 angegeben. Nach dieser Lehre sind Mittel vorgesehen, die verhindern, daß die Becher im aufwärts gerichteten Förderbereich ganz einfach an ihren Achsen nach unten hängen, wodurch die Füllmenge begrenzt ist. Die Mittel sorgen dafür, daß die Becher aus dieser Hängelage in eine Lage gedrückt werden, in der ihre Füllöffnung wesentlich mehr nach oben gerichtet ist und daher der Füllgrad und damit die Fördermenge erhöht ist.

Durch dieses seitliche Herausdrücken bzw. Herausschwenken aus der Hängelage werden auf die Zugglieder Kräfte quer zur Zugrichtung ausgeübt, die von den Zuggliedern ohne weiteres aufgenommen werden können. Die durch diese seitlichen Zugkräfte bewirkte Auslenkung kann durch einen entsprechenden Verlauf der Führungskante ausgeglichen werden. Es ist aber auch möglich, die Zugglieder trotz der seitlichen Kräfte in ihrer normalen, geraden Bahn zu halten, indem Stützrollen vorgesehen werden. Eine besonders zweckmäßige Möglichkeit ist auch in Anspruch 6 angegeben, wo eine Gegenführungskante diese seitliche Auslenkung verhindert. An die Gegenführungskante können grundsätzlich beliebige Teile der Zugglieder oder daran vorgesehene Teile gleiten, zweckmäßigerweise handelt es sich dabei jedoch um Führungsrollen, die sich ganz einfach auf Verlängerungen der Achsen befinden können, um die die Becher drehbar bzw. schwenkbar gelagert sind.

Nach Anspruch 8 sind die beiden Führungskanten durch zwei gegenüberliegende Kanten einer Führungsschiene gebildet, die nach Anspruch 9 vorzugsweise am Anfang und am Ende sichelförmig ausgebildet ist, so daß der Auflauf und Ablauf leicht und gleichmäßig erfolgt. Zum Auflauf ist gemäß Anspruch 10 ein Anschlag vorgesehen, der ein leichtes Ankippen der Becher bewirkt, so daß die seitlichen Vorsprünge auf die Führungskante auflaufen können, was besonders dann von Vorteil ist, wenn die auf der Führungskante und der Gegenführungskante gleitenden Vorsprünge oder Rollen in Förderrichtung im wesentlichen auf der gleichen Linie liegen, z. B. in der neutralen Zone der Zugglieder.

Anhand der Zeichnung soll die Erfindung näher erläutert werden.

Fig. 1 zeigt schematisch ein Ausführungsbeispiel eines Becherförderers gemäß der Erfindung in Z-Form von der Seite,

Fig. 2 zeigt ein zweites Ausführungsbeispiel eines Becherförderers gemäß der Erfindung in U-Form,

Fig. 3 zeigt vergrößert eine Einzelheit im Bereich des Umlaufs um eine Umlenkrolle,

Fig. 4 ist ein vergrößerter Teilschnitt IV-IV durch Fig. 1 mit einer Kette als Zugglied,

Fig. 5 entspricht spiegelbildlich Fig. 4 mit einem Gummiblockzahnriemen als Zugglied und

Fig. 6 ist eine vergrößerte Seitenansicht eines Bechers.

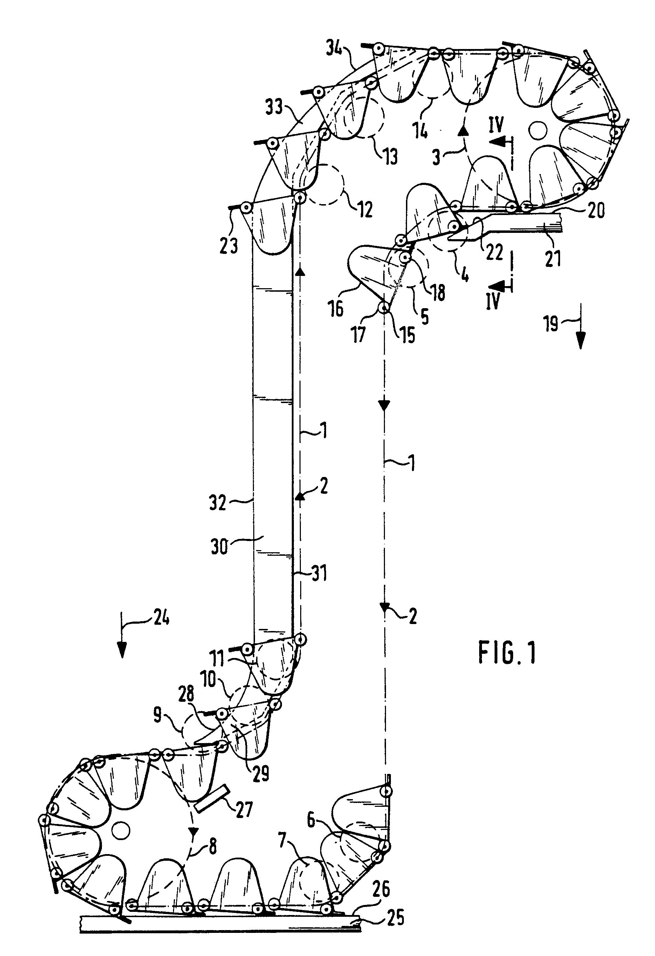

In Fig. 1 laufen Zugglieder 1 in Richtung von Pfeilen 2 um schematisch dargestellte Antriebsräder 3 sowie um Umlenkrollen 4 bis 14. An den Zuggliedern 1 sind jeweils mittels Achsen 15 Becher 16 gelenkig befestigt. Auf den Achsen 15 befinden sich außerdem seitliche Rollen 17. Außerdem weist jeder Becher 16 auf beiden Seiten im Bereich einer Auflagekante 23 Rollen 18 auf, die sich in einem durch einen Pfeil 19 angedeuteten Ausschüttbereich auf einer Auflagekante 20 einer Auflageschiene 21 abstützen. Die Auflagekante 20 weist ein in Förderrichtung vorn liegendes, abgeschrägtes Teil 22 auf, das die in Förderrichtung hinteren Rollen 18 so lange abstützt, bis sich die in Förderrichtung vorn liegende Achse 15 so weit nach unten bewegt und damit der Becher 16 so weit gedreht hat, daß er aufgrund seines Eigengewichts in einer Lage verbleibt, in der die Auflagekante 23, die sich an jedem Becher 16 befindet, an der benachbarten Kante des benachbarten Bechers 16 abstützt. Diese Abstützung erfolgt auch in einem durch einen Pfeil 24 angedeuteten Aufgabebereich zum Füllen der Becher 16.

Im Bereich der Umlenkrollen 6 und 7 stützen sich die Becher 16 aufgrund ihrer dreieckigen oder trapezförmigen Ausbildung gegenseitig ab, so daß sie aus ihrer Bahn nicht herauskippen können. Um ein solches Herauskippen im Bereich zwischen den Umlenkrollen 7 und 8 zu vermeiden, ist eine Auflageschiene 25 mit einer Auflagekante 26 vorgesehen, auf der sich die in Förderrichtung hinten liegenden Rollen 18 abstützen. Sobald die Becher 16 den Bereich der Umlenkrolle 8 erreichen, stützen sie sich wieder aufgrund ihrer dreieckigen oder trapezförmigen Form gegenseitig ab und verriegeln sich damit gegenseitig.

Unterhalb der Umlenkrolle 9 befindet sich ein Anschlag 27, gegen den die Becher 16 mit ihrer Unterkante anstoßen und so etwas angekippt werden, so daß die in Förderrichtung hinten liegende Rolle 18 angehoben wird und somit im weiteren Förderverlauf auf eine Kante 28 eines sichelförmigen Teils 29 einer Führungsschiene 30 aufläuft. Die in Förderrichtung vorn liegenden Rollen 17 verbleiben dabei unterhalb des sichelförmigen Teiles 29 der Führungsschiene 30, so daß sie im weiteren Verlauf an einer Gegenführungskante 31 laufen, während die Rollen 18 auf einer Führungskante 32 laufen. Der Abstand der Gegenführungskante 31 und der von der Führungskante 32 ist etwas geringer als der lichte Abstand zwischen den Rollen 17 und 18, um die Kräfte nicht zu groß werden zu lassen, die dadurch entstehen, daß die Becher durch die Zugglieder 1 im Bereich ihrer Achsen 15 nach oben gezogen werden, während gleichzeitig die Becher 16 mit ihrem Fördergewicht nach unten ziehen. Die Klemmwirkung ist damit begrenzt. Entscheidend ist die Tatsache, daß die Becher 16 mit ihrer Füllöffnung im Bereich der Führungsschiene 30 im wesentlichen nach oben gehalten werden, so daß sie voll gefüllt sein können, woraus sich eine große Förderleistung ergibt.

Im Bereich der Umlenkrollen 12, 13 und 14 läuft die Führungsschiene 30 in einen sichelförmigen Teil 33 mit einer oberen Führungskante 34 aus, wodurch ein gleichmäßiger Übergang in den oberen, horizontalen Förderbereich erzielt wird. Im Bereich der Antriebsräder 3 verriegeln sich die Becher 16 wieder gegenseitig, so daß ein Herauskippen verhindert ist, genauso wie das bei der Umlenkrolle 8 der Fall ist.

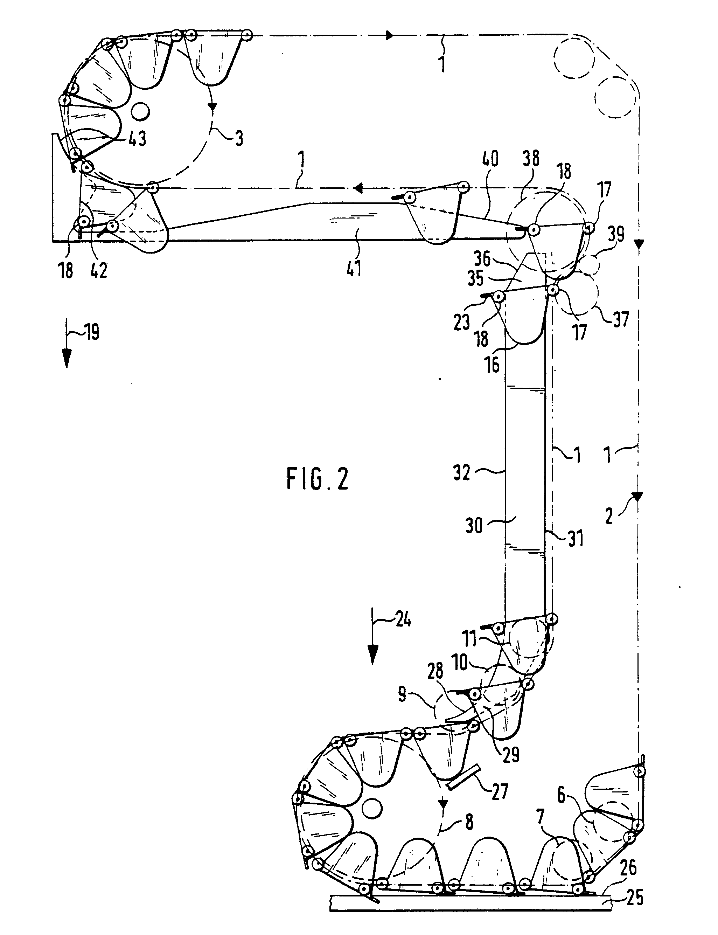

Fig. 2 zeigt in gleicher Darstellungsweise wie in Fig. 1 ein Ausführungsbeispiel eines Becherförderers bei dem statt der Z-Form eine U-Form gebildet ist. Im unteren und vertikalen Bereich ist die Ausführung genauso wie in Fig. 1. Gleiche Teile sind mit gleichen Bezugsziffern versehen. Das gleiche gilt auch für das Antriebsrad 3 und den von dort wieder nach unten führenden Teil des Becherförderers.

Anders als in Fig. 1 fehlt der Führungsschiene 30 der obere, sichelförmige Teil 33, er ist durch einen kurzen, abgeschrägten Teil 35 ersetzt, auf dessen Führungskante 36 die Rollen 18 abrollen, wenn die Achsen 15 mit dem Zugglied 1 um Umlenkrollen 37 und 38 laufen. Im Höhenbereich der Führungskante 36 befindet sich eine Stützrolle 39, gegen die die Becher 16 mit ihrer Wandung anstoßen und abrollen, so daß sie im wesentlichen in einer Lage verbleiben, in der die Füllöffnung nach oben weist, so daß auch die Rollen 18 in gleicher Weise wie die Achsen 18 nach oben wandern und somit auf eine Auflagekante 40 einer Führungsschiene 41 aufrollen, die im weiteren Verlauf ein Herabkippen und damit ein Auskippen der gefüllten Becher 16 verhindert. Im durch den Pfeil angedeuteten Ausschüttbereich verläuft die Auflagekante 40 geneigt nach unten, wodurch die Ausschüttbewegung eingeleitet wird. Im weiteren Verlauf geht die Auflagekante 40 in eine Anschlagkante 42 über, die die Rollen 18 festhält, während die Achsen 15 mit den Zuggliedern 1 weiterwandern, wodurch ein vollständiges Kippen und Ausleeren der Becher 16 erzielt wird. Die Anschlagkante 42 geht in eine gebogene Kante 43 über, die die Becher 16 wieder in ihre gegenseitige Verriegelungslage um die Antriebsräder 3 bringt.

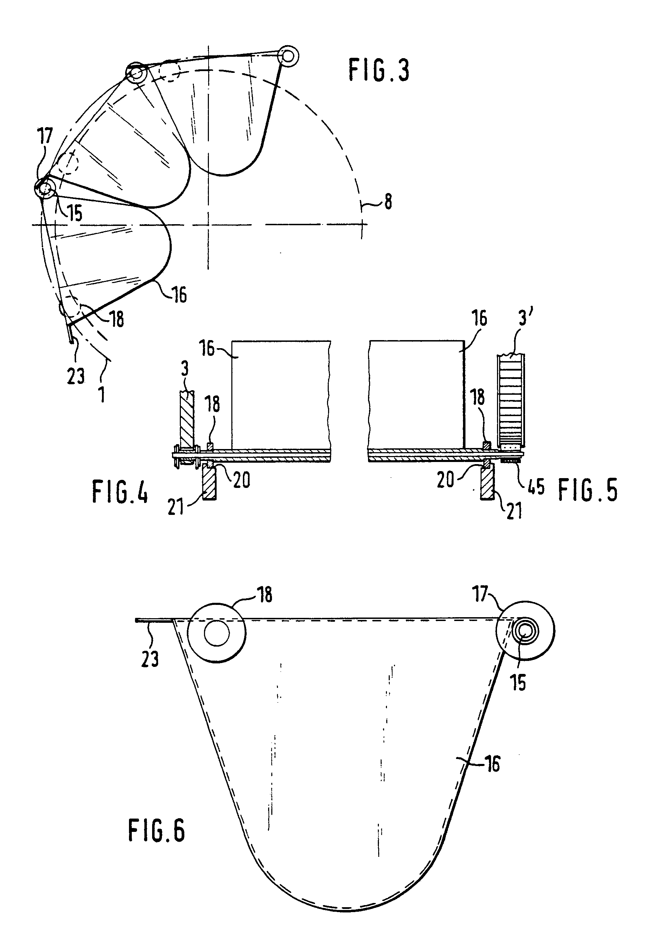

Fig. 3 zeigt vergrößert die gegenseitige Verriegelung der Becher 16 im Bereich der unteren Umlenkrollen 8.

Fig. 4 ist ein Teilschnitt IV-IV durch Fig. 1 und verdeutlicht die Auflage der Rollen 18 auf der Auflagekante 20 der Auflageschiene 21. Das Zugglied 1 ist als Kette 44 ausgebildet, die um das Antriebsrad 3 läuft.

Fig. 5 ist spiegelbildlich zu Fig. 4, wobei der einzige Unterschied hierzu darin besteht, daß statt der Kette 44 ein Gummiblockzahnriemen 45 verwendet ist, der um ein Antriebsrad 3' umläuft.

Fig. 6 zeigt vergrößert einen der Becher 16 von der Seite.

**Patentansprüche**

1. Becherförderer mit zwei seitlichen, endlosen Zuggliedern (1), zwischen denen Becher (16) an ihrem oberen Bereich schwenkbar um eine Achse (15) gelagert sind, die quer zur Richtung der Zugglieder (1) verläuft, wobei die Becher (16) mit einer Kante versehen sind, die jeweils die benachbarte Kante des benachbarten Bechers (16) übergreift, und mit Führungen zur Lagesicherung der Becher (16), dadurch gekennzeichnet,
- daß die Achse (15) im vorderen oder hinteren Bereich der Becher (16) verläuft,
- daß die Kante eine Auflagekante (23) ist und im entgegengesetzt liegenden Bereich angeordnet ist,
- daß der Becher (16) im Bereich der Auflagekante (23) mit seitlichen Zapfen oder Rollen (18) zum Eingriff mit den Führungen (Auflageschienen 21, 25, Führungsschienen 30, 41) versehen ist,
- daß bei etwa waagerechtem Verlauf der Zugglieder (1) und nach oben gerichteter Becheröffnung und in Bereichen mit in Förderrichtung vorn liegender Achse die Becher (16) lediglich über die Auflagekante (23) abgestützt sind,
- daß in den Umlenkbereichen (Antriebsrad 3, Umlenkrollen 6, 7, 8), in denen die Becheröffnungen nach außen gerichtet sind, sich die Becher (16) gegenseitig abstützen, und
- daß Führungen nur in den Bereichen vorgesehen sind, in denen die Becheröffnung nach unten gerichtet ist (Auflageschiene 25), in denen bei aufsteigender Förderung die Becheröffnung etwa waagerecht liegen soll (Führungsschiene 30) oder in denen - bedingt durch den Verlauf des Becherförderers - eine Abstützung der Auflagekante (23) an der Kante des benachbarten Bechers (16) nicht möglich ist (Führungsschiene 41).

2. Becherförderer nach Anspruch 1, dadurch gekennzeichnet, daß Anschläge an den Bechern (16) vorgesehen sind, die an entsprechende Gegenanschläge an den jeweils benachbarten Bechern oder an den Zuggliedern (1) in Umlenkbereichen der Zugglieder (1) anschlagen und ein Herauskippen der Becher (16) aus der Förderbahn verhindern.

3. Becherförderer nach Anspruch 2, dadurch gekennzeichnet, daß die Anschläge und/oder die Gegenanschläge durch die in Förderrichtung vorn bzw. hinten liegenden Wandungen der Becher (16) gebildet sind, deren gegenseitiger Abstand so eng bemessen ist, daß die Wandungen bei Herauskippen der Becher (16) aus der Förderbahn gegeneinanderstoßen.

4. Becherförderer nach Anspruch 1, dadurch gekennzeichnet, daß an jedem Becher (16) Federn vorgesehen sind, die die Becher (16) entgegen der Bewegung des Herauskippens aus der Förderbahn vorspannen.

5. Becherförderer nach Anspruch 1, dadurch gekennzeichnet, daß wenigstens auf einer Seite der Becher (16) am in Förderrichtung hinteren Ende der Becher (16) ein Vorsprung (Rollen 18) vorgesehen ist und daß die Führung im aufsteigenden Förderbereich eine Führungskante (32) aufweist, die entgegen der Auflagerichtung der Auflagekante (23) in einem Abstand zu der Bahn des Vorsprunges (Rollen 18) verläuft, die dieser durchlaufen würde, wenn er auf der benachbarten Kante des benachbarten Bechers (16) aufliegen würde, und auf die der Vorsprung (Rollen 18) aufläuft, derart, daß der Becher (16) aus einer Hängelage in eine Lage gedrückt wird, in der die Füllöffnung des Bechers (16) im wesentlichen nach oben gerichtet ist.

6. Becherförderer nach Anspruch 5, dadurch gekennzeichnet, daß ein weiterer Vorsprung (Rollen 17) vorzugsweise im Bereich der Achse (15) angeordnet ist, daß im aufsteigenden Förderbereich eine Gegenführungskante (31) angeordnet ist, die der Führungskante (32) entgegengerichtet ist und im Abstand und parallel dazu verläuft, wobei der weitere Vorsprung (Rolle 17) an der Gegenführungskante (31) gleitet und der Abstand zwischen der Führungskante (32) und der Gegenführungskante (31) etwas kleiner bemessen ist als der Abstand zwischen dem Vorsprung (Rollen 18) und dem weiteren Vorsprung (Rolle 17).

7. Becherförderer nach Anspruch 5 oder 6, dadurch gekennzeichnet, daß die Vorsprünge durch Rollen (17, 18) gebildet sind.

8. Becherförderer nach Anspruch 6, dadurch gekennzeichnet, daß die Führungskante (32) und die Gegenführungskante (31) durch zwei Kanten einer Führungsschiene (30) gebildet sind.

9. Becherförderer nach Anspruch 8, dadurch gekennzeichnet, daß die Führungsschiene (30) im Übergangsbereich zwischen dem aufwärtsgerichteten Förderbereich und angrenzenden, im wesentlichen horizontalen Förderbereichen sichelförmig (29) ausgebildet ist.

10. Becherförderer nach Anspruch 9, dadurch gekennzeichnet, daß im Übergangsbereich von einem horizontalen Förderbereich zu dem aufsteigenden Förderbereich unterhalb der Spitze des sichelförmigen Teils (29) der Führungsschiene (30) ein vorzugsweise schräger Anschlag (27) vorgesehen ist, der so angeordnet ist, daß daran die Becher (16) vorzugsweise mit ihrer Wandung anstoßen und so etwas angekippt werden, so daß die Vorsprünge (Rollen 18) jeweils auf die Führungskante (32) aufgleiten.

11. Becherförderer nach Anspruch 3, dadurch gekennzeichnet, daß die Becher (16) im Querschnitt im wesentlichen dreieck- oder trapezförmig ausgebildet sind.

12. Becherförderer nach Anspruch 8, dadurch gekennzeichnet, daß die Führungskante (32) im Übergangsbereich zwischen dem aufsteigenden Förderbereich und einem angrenzenden, unteren Trum eines horizontalen Förderbereichs zur Gegenführungskante (31) hin abgeschrägt ist (Führungskante 36), daß die Verlängerung der Gegenführungskante (31) eine Umlenkrolle (30) zwischen den beiden genannten Bereichen schneidet, daß im Winkel zwischen der Gegenführungskante (31) und der genannten Umlenkrolle (38) auf der anderen Seite der Zugglieder (1) an diesen anliegende Umlenkrollen (37) vorgesehen sind, und daß am Ende der Führungsschiene (30) wenigstens eine Stützrolle (39) angeordnet ist, an der die Becher (16) mit ihren Wandungen entlanggleiten bis zu einer Höhe oberhalb der Achse der Umlenkrollen (38) zwischen den beiden genannten Bereichen, in welcher Höhe der Auflaufpunkt einer Auflagekante (40) einer sich unterhalb des unteren Trums des horizontalen Förderbereichs erstreckenden Führungsschiene (41) liegt, derart, daß die Rollen (18) auf die Auflagekante (40) aufrollen.

13. Becherförderer nach Anspruch 12, dadurch gekennzeichnet, daß die Auflagekante (40) vom Auflaufpunkt weg ansteigt.

14. Becherförderer nach Anspruch 12, dadurch gekennzeichnet, daß die Auflagekante (40) vor dem Ausschüttbereich (19) nach unten geneigt verläuft, derart, daß die Becher (16) im Ausschüttbereich (Pfeil 19) frei hängen können.

15. Becherförderer nach Anspruch 14, dadurch gekennzeichnet, daß sich im Ausschüttbereich (Pfeil 19) eine Anschlagkante (42) befindet, gegen die die Becher (16) oder ihre Rollen (18) anstoßen und so die Becher (16) in die Ausschüttlage schwenken.

16. Becherförderer nach Anspruch 15, dadurch gekennzeichnet, daß sich die Anschlagkante (42) vertikal bis in die Nähe des Antriebsrades (3) oder der Umlenkrolle am Ende des horizontalen Trums erstreckt.

**Claims**

1. Bucket conveyor with two lateral, endless traction members (1), between which buckets (16) are mounted to be pivotable about a shaft (15) at their upper region, which shaft extends transversely of the direction of the traction members (1), the buckets (16) being provided with an edge which at times engages over the adjacent edge of the adjacent bucket (16), and with guides for securing the position of the buckets (16), characterised in that
- the shaft (15) extends in the forward or rearward region of the bucket (16),
- that the edges is a supporting edge (23) and is arranged in the oppositely disposed region,
- that the bucket (16) is provided in the region of the support edge (23) with lateral pins or rollers (18) for engagement with the guides (support rails 21, 25, guide rails 30, 41),

- that with approximately horizontal travel of the traction members (1) and upwardly directed bucket openings and in regions with the shaft disposed at the front in the conveying direction, the bucket (16) are only supported by way of the supporting edge (23),

- that in the diverting regions (driving wheel 3, deflecting rollers 6, 7, 8), in which the bucket openings are directed outwardly, the bucket (16) are mutually supported, and

- that guides are provided only in regions in which the bucket opening is directed downwardly (support rail 25), in which, when conveying in an upward direction, the bucket opening is to lie approximately horizontally (guide rail 30) or in which a supporting of the bearing edge (23) on the edge of the adjacent bucket (16) is not possible (guide rail 41).

2. Bucket conveyor according to claim 1, characterised in that stops are provided on the buckets (16), which bear against corresponding counter-stops on the respective adjacent buckets or against the traction members (1) in deflecting regions of the traction members (1) and prevent any tilting of the buckets (16) out of the conveying path.

3. Bucket conveyor according to claim 2, characterised in that the stops and/or the counter/stops are formed by those walls of the bucket (16) disposed in front or behind in the conveying direction, the mutual spacings thereof being of such tight dimensions that the walls abut one against the other when the buckets (16) are tilted out of the path of conveyance.

4. Bucket conveyor according to claim 1, characterised in that springs are provided on each bucket (16), which springs bias the buckets (16) against the movement of tipping out from the conveyor path.

5. Bucket conveyor according to claim 1, characterised in that, at least on one side of the bucket (16) on that end thereof at the rear in the conveying direction, a projection (rollers 18) is provided and that the guide means in the ascending region of the conveyor comprises a guide edge (32), which extends opposite to the supporting direction of the support edge (23) at a distance from the path of the projection (rollers 18) which would pass through this path if it were to bear on the adjacent edge of the adjacent bucket (16), and on which the projection (rollers 18) runs, in such manner that the bucket is forced from a suspended position into a position in which the filling opening of the bucket (16) is directed substantially upwards.

6. Bucket conveyor according to claim 5, characterised in that a further projection (roller 17) is advantageously arranged in the region of the shaft (15), that in the ascending conveyor region, an edge (31) guiding in the opposite direction is arranged, which is directed opposite to the guiding edge (32) and extends at a distance from and parallel thereto, the further projection (roller 17) sliding on the opposite guide edge (31) and the spacing between the guide edge (32) and the opposite guide edge (31) being of somewhat smaller dimensions than the distance between the projection (rollers 18) and the further projection (roller 17).

7. Bucket conveyor according to claim 5 or 6, characterised in that the projections are formed by rollers (17, 18).

8. Bucket conveyor according to claim 6, characterised in that the guiding edge (32) and the counter-guiding edge (31) are formed by two edges of a guide rail (30).

9. Bucket conveyor according to claim 8, characterised in that the guide rail (30) is made sickle-shaped (29) in the transition region between the upwardly directed conveyor zone and adjoining substantially horizontal conveyor zones.

10. Bucket conveyor according to claim 9, characterised in that, in the transition zone from a horizontal region to the ascending conveyor region, beneath the tip of the sickle-shaped part (29) of the guide rail (30), there is provided a preferably oblique stop (27) which is so arranged that the buckets (16) advantageously abut against it with their wall and are so tilted to some extent that the projections (rollers 18) each slide on to the guiding edge (32).

11. Bucket conveyor according to claim 3, characterised in that the buckets (16) are made substantially triangular or trapezoidal in cross-section.

12. Bucket conveyor according to claim 8, characterised in that the guiding edge (32) in the transitional zone between the ascending conveyor region and an adjoining lower run of a horizontal conveying zone is bevelled towards the opposite guiding edge (31), (guiding edge 36), that the extension of the opposite guiding edge (31) interacts a guiding or deflecting roller (38) between the two said zones, that in the angle between the opposite guiding edge (31) and the said deflecting roller (38) on the other side of the traction members (1), deflecting rollers (37) bearing on these latter are provided, and that at least one support roller (39) is arranged on the end of the guide rail (30), along which the buckets (16) slide with their walls to a height above the axis of the deflecting rollers (38) between the two said zones, at which height is disposed the run-up point of a supporting edge (40) of a guide rail (41) extending beneath the lower run of the horizontal conveying zone, in such manner that the rollers (18) roll on the supporting edge (40).

13. Bucket conveyor according to claim 12, characterised in that the supporting edge (40) ascends away from the run-on point.

14. Bucket conveyor according to claim 12, characterised in that the supporting edge (40) extends with a downward slope before the tipping zone (19), in such manner that the buckets (16) can hang freely in the tipping zone (arrow 19).

15. Bucket conveyor according to claim 14, characterised in that an abutment edge (42) is disposed in the tipping zone (arrow 19), against which edge the buckets (16) or their rollers (18) abut and thus swing the buckets (16) into the tipping position.

16. Bucket conveyor according to claim 15, characterised in that the abutment edge (42) extends vertically until in the vicinity of the driving wheel (3) or of the guide roller at the end of the horizontal run.


## Revendications

1. Transporteur à godets comportant deux organes de traction latéraux sans fin (1), entre lesquels sont montés des godets (16) dans leur zone supérieure de façon à pouvoir pivoter autour d'un axe (15) qui est orienté perpendiculairement à la direction des organes de traction (1), les godets (16) étant pourvus d'un bord qui s'accroche respectivement sur le bord adjacent du godet adjacent (16), ainsi que de guides pour le maintien en position des godets (16), caractérisé en ce que:
- l'axe (15) est disposé dans une zone avant ou une zone arrière des godets (16),
- le bord est un bord d'appui (23) et est disposé dans une zone située à l'opposé,
- le godet (16) est pourvu, dans une zone du bord d'appui (23), de tourillons ou galets latéraux (18) coopérant avec les guides (rails d'appui 21, 25, rails de guidage 30, 41),
- dans le cas d'un parcours à peu près horizontal des organes de traction (1) et lorsque l'ouverture de godet est dirigée vers le haut, les godets (16) sont simplement soutenus par l'intermédiaire du bord d'appui (23) dans des zones où l'axe est situé en avant dans la direction de transport,
- dans les zones de renvoi (roue d'entraînement 3, galets de renvoi 6, 7, 8), dans lesquelles les ouvertures des godets sont dirigées vers l'extérieur, les godets (16) sont appuyés l'un contre l'autre, et
- il est prévu des guides seulement dans les zones où l'ouverture de godet est dirigée vers le bas (rail d'appui 25), dans lesquelles, dans le cas d'un transport en montée, l'ouverture de godet doit être située à peu près horizontalement (rail de guidage 30), ou bien dans lesquelles - du fait du profil du transporteur à godets - un soutien du bord d'appui (23) par le bord du godet adjacent (16) n'est pas possible (rail de guidage 41).

2. Transporteur à godets selon la revendication 1, caractérisé en ce qu'il est prévu sur les godets (16) des butées qui entrent en contact avec des contre-butées correspondantes prévues sur les godets mutuellement adjacents ou bien sur les organes de traction (1) dans des zones de renvoi des organes de traction (1) et qui empêchent un basculement des godets (16) vers l'extérieur à partir de la voie de transport.

3. Transporteur à godets selon la revendication 2, caractérisé en ce que les butées et/ou les contre-butées sont constituées par les parois des godets (16) qui sont situées en avant ou en arrière dans la direction de transport et dont l'espacement mutuel est dimensionné suffisamment étroitement pour que les parois viennent buter l'une contre l'autre dans le cas d'un basculement des godets (16) vers l'intérieur à partir de la voie de transport.

4. Transporteur à godets selon la revendication 1, caractérisé en ce qu'il est prévu sur chaque godet (16) des ressorts qui exercent une précontrainte sur les godets (16) en s'opposant à un mouvement produisant un basculement vers l'extérieur à partir de la voie de transport.

5. Transporteur à godets selon la revendication 1, caractérisé en ce que, au moins d'un côté des godets (16), il est prévu à l'extrémité arrière, dans la direction de transport, du godet (16) une saillie (galets 18) et en ce que le guidage est assuré, dans une zone de transport en montée, par un bord de guidage (32) qui est disposé, à l'opposé de la direction d'appui du bord d'appui (23), à une distance d'espacement par rapport à la voie de la saillie (galets 18) qui serait suivie par elle si elle s'appuyait sur le bord adjacent du godet adjacent (16), et sur lequel passe la saillie (galets 18) de telle sorte que le godet (16) soit poussé à partir d'une position de suspension jusque dans une position dans laquelle l'ouverture de remplissage du godet (16) est dirigée sensiblement vers le haut.

6. Transporteur à godets selon la revendication 5, caractérisé en ce qu'il est prévu une autre saillie (galet 17), avantageusement dans une zone de l'axe (15), en ce que dans une zone de transport en montée, il est prévu un bord de contre-guidage (31), qui est orienté en sens opposé au bord de guidage (32) et qui est espacé et parallèle à celui-ci, l'autre saillie (galet 17) glissant sur le bord de contre-guidage (31) et l'espacement entre le bord de guidage (32) et le bord de contre-guidage (31) étant dimensionné un peu plus petit que l'espacement entre la première saillie (galets 18) et l'autre saillie (galet 17).

7. Transporteur à godets selon la revendication 5 ou 6, caractérisé en ce que les saillies sont constituées par des galets (17, 18).

8. Transporteur à godets selon la revendication 6, caractérisé en ce que le bord de guidage (32) et le bord de contre-guidage (31) sont constitués par deux bords à rail de guidage (30).

9. Transporteur à godets selon la revendication 8, caractérisé en ce que le rail de guidage (30) est agencé en forme de croissant (29) dans une zone de transition entre la zone de transport dirigée vers le haut et deux zones adjacentes de transport orientées sensiblement horizontalement.

10. Transporteur à godets selon la revendication 9, caractérisé en ce que, dans une zone de transition entre une zone horizontale de transport et la zone de transport en montée, il est prévu en dessous du sommet de la partie (29) en forme de croissant du rail de guidage (30), une butée (27) de préférence inclinée et qui est disposée de de telle sorte que les godets (16) viennent avantageusement buter contre elle avec leur paroi et soient ainsi soumis à un léger basculement de telle sorte que les saillies (galets 18) glissent respectivement sur le bord de guidage (32).

11. Transporteur à godets selon la revendication 3, caractérisé en ce que les godets (16) sont agencés avec une section droite ayant sensiblement une forme de triangle ou de trapèze.

12. Transporteur à godets selon la revendication 8, caractérisé en ce que le bord de guidage (32) est incliné (bord de guidage 36) dans une zone de transition entre la zone de transport en montée et une partie inférieure adjacente d'une zone horizontale de transport en direction du bord de contre-guidage (31), en ce que le prolongement du bord de contre-guidage (31) coupe un galet de renvoi (38) entre les deux zones précitées, en ce qu'il est prévu dans l'angle existant entre le bord de contre-guidage (31) et le galet de renvoi précité (38), de l'autre côté des organes de traction (1), des galets de renvoi (37) s'appliquant contre ceux-ci et en ce qu'il est prévu à l'extrémité du rail de guidage (30) au moins un galet d'appui (39) contre lequel glissent les godets (16) avec leurs parois jusqu'à une certaine hauteur au-dessus de l'axe des galets de renvoi (38) entre les deux zones précitées, hauteur à laquelle est situé le point d'entrée d'un bord d'appui (40) d'un rail de guidage (41) s'étendant en dessous de la partie inférieure de la zone horizontale de transport, de telle sorte que les galets (18) roulent sur le bord d'appui (40).

13. Transporteur à godets selon la revendication 12, caractérisé en ce que le bord d'appui (40) est incliné vers le haut à partir du point d'entrée.

14. Transporteur à godets selon la revendication 12, caractérisé en ce que le bord d'appui (40) est pourvu d'un profil incliné vers le bas avant la zone de déchargement (19) de telle sorte que les godets (16) puissent être suspendus librement dans la zone de déchargement (flèche 19).

15. Transporteur à godets selon la revendication 14, caractérisé en ce qu'il est prévu dans la zone de déchargement (flèche 19) un bord de butée (42) contre lequel viennent buter les godets (16) ou leurs galets (18) de manière que les godets (16) pivotent jusque dans leur position de déchargement

16. Transporteur à godets selon la revendication 15, caractérisé en ce que le bord de butée (42) s'étend verticalement jusqu'à proximité de la roue d'entraînement (3) ou du galet de renvoi à l'extrémité du parcours horizontal de transport.

FIG.1

FIG. 2

FIG.3

17

15

16

18

8

23

1

FIG.4

16

3

18

20

21

16

18

20

3'

45 FIG.5

21

FIG.6

18

17

23

15

16